# EUROPEAN PATENT APPLICATION

(11) **EP 1 727 145 A1**
(43) Date of publication of application: **29.11.2006**
(21) Application number: 05726668.6
(22) Date of filing: 15.03.2005
(51) Int. Cl.: G11B 27/34, G11B 27/00, G11B 20/10

(54) **AUDIO INFORMATION OUTPUT DEVICE, AUDIO INFORMATION OUTPUT METHOD, AND AUDIO INFORMATION OUTPUT PROGRAM**

(30) Priority: 19.03.2004 JP 2004081097
(71) Applicant: Pioneer Corporation, Tokyo 153-8654 (JP)
(72) Inventor: ISOZAKI, Fumio, Pioneer Corporation, Tokyo 1538654 (JP)
(74) Representative: Haley, Stephen
(86) International application number: PCT/JP2005/004489
(87) International publication number: WO 2005/091296

(57) **Abstract**

A sound information output apparatus includes a data reading unit, a processor, a memory, a sound generator unit, a sound output unit, and a speaker. The apparatus assigns arbitrary identification sound to each CD as, for example, a song of birds for a certain CD, sound of a fanfare for another CD, etc., and, when the CD is played, this identification sound (sound icon) is output in the form of sound prior to the contents of the CD.

## Description

### TECHNICAL FIELD

The present invention relates to an audio information output apparatus, an audio information output method, and an audio information output program for outputting audio information in contents converted into an electronic form, as sound. However, the present invention is not limited to be applied to the above audio information output apparatus, the audio information output method, and the audio information output program.

### BACKGROUND ART

Some audio apparatuses to reproduce digital data such as music are configured to be capable of displaying detailed information on contents recorded on a CD (Compact Disc), an MD (MiniDisc), or the like that is being played, on a liquid crystal display provided on the front of a main unit thereof.

For example, on a CD, the number of songs recorded on the CD and the playing time of each song are recorded in an area called TOC (table of contents) provided on the innermost circumference of the disk. On a CD conforming to the CD-Text standard, arbitrary character strings (specifically, the title of an album or each song, names of performers, etc.) are also recorded in addition to the above items, in an unused area in the TOC. An audio apparatus that plays CDs as above reads the information (hereinafter, collectively "contents information") included in the TOC and displays the information in a corresponding character font on the above display.

### DISCLOSURE OF INVENTION

### PROBLEM TO BE SOLVED BY THE INVENTION

However, when the above apparatus is installed in, especially, an automobile (in case of a vehicle-mounted apparatus), the driver driving a car has to change the observing point from a forward direction to the audio apparatus inside the car to check the displayed contents information every time. Moreover, with an apparatus not conforming to the "CD-Text", it is impossible to grasp which CD is to be played next unless the CD is actually played or is taken out of the tray once. Therefore, although the audio apparatus can display the number of songs and the playing time of each song before the apparatus actually starts reproducing music, it is usually difficult to identify the CD only with this configuration.

Especially, in the case of a car audio apparatus, it is preferred to consecutively play plural CDs by switching the CDs using a CD changer. However, with such an apparatus, it is hard to understand which CD is to be played next because a driver tends to forget which CDs have been set in what order. Therefore, for example, when the driver would like to play a specific CD in the CD changer, it is necessary to repeat such an operation of determining whether the CD currently being played is the target CD based on the contents information (when CD-Text is supported) to be displayed on a display or an introduction of a song (when "CD-Text" is not supported) and switching the CD to the next CD if the CD is not the target CD.

Therefore, such operation of the audio apparatus while driving can cause the driver to lack attention to the road ahead or cause a traffic accident, and the operation until finding the target CD is complicated and time consuming, specifically, because it takes a little while from when a CD starts turning until music is actually started, or because it is necessary to listen to music for a while since it is difficult to determine whether the CD being played is the target CD by listening to the music only for a short time. Thus, problems in terms of safety and operability are considered.

### MEANS FOR SOLVING PROBLEM

To solve the above problems and to achieve the object, an audio information output apparatus according to invention of claim 1, the audio information output apparatus that outputs audio information on contents converted into an electronic form, as sound, includes a reading unit that reads information on the contents from a recording medium that stores the contents; a retrieving unit that retrieves unique identification information created for each recording medium based on the information read by the reading unit; a creating unit that creates the identification information for the recording medium for which the identification information can not be retrieved by the retrieving unit; and an output unit that outputs sound identified by the identification information retrieved by the retrieving unit or the identification information created by the creating unit.

An audio information output method according to invention in claim 5, the audio information output method of outputting audio information on contents converted into an electronic form, as sound includes a reading step of reading information on the contents from a recording medium that stores the contents; a retrieving step of retrieving unique identification information created for each recording medium based on the information read at the reading step; a creating step of creating the identification information for the recording medium for which the identification information can not be retrieved at the retrieving step; and an output step of outputting sound identified by the identification information retrieved at the retrieving step or the identification information created at the creating step.

An audio information output program according to the present invention in claim 6, makes a processor execute a receiving step of receiving information on contents converted into an electronic form; a retrieving step of retrieving unique identification information created for a recording medium that stores the contents based on the information received at the receiving step; a creating step of creating the identification information for the recording medium for which the identification information can not be retrieved at the retrieving step; and an output instructing step of instructing a sound generator to output sound identified by the identification information retrieved at the retrieving step or the identification information created at the creating step.

### BRIEF DESCRIPTION OF DRAWINGS

Fig. 1 is an explanatory view of an example of a hardware configuration of an audio information output apparatus according to a first embodiment of the present invention;
Fig. 2 is an explanatory view of a functional configuration of the audio information output apparatus according to the first embodiment of the present invention;
Fig. 3 is a flowchart showing an entire procedure of an audio information output process by the audio information output apparatus according to the first embodiment of the present invention;
Fig. 4 is a flowchart showing a detailed procedure of a sound icon output process by the audio information output apparatus according to the first embodiment of the present invention;
Fig. 5 is an explanatory view of an example of a hardware configuration of an audio information output apparatus according to a second embodiment of the present invention;
Fig. 6 is an explanatory view of a functional configuration of the audio information output apparatus according to the second embodiment of the present invention; and
Fig. 7 is a flowchart showing an entire procedure of an audio information output process by the audio information output apparatus according to the second embodiment of the present invention.

### EXPLANATIONS OF LETTERS OR NUMERALS

- 100, 500: Data reading unit
- 101, 501: Processor
- 102, 502: Memory
- 103, 503: Sound generator unit
- 104, 504: Sound output unit
- 105, 505: Speaker
- 506: Network I/F
- 200, 600: Contents information receiving unit
- 201, 601: Sound icon receiving unit
- 202, 602: Sound icon storing unit
- 203, 603: Sound icon creating unit
- 204, 604: Sound icon output unit
- 605: Contents information retrieving unit

### BEST MODE(S) FOR CARRYING OUT THE INVENTION

Exemplary embodiments of an audio information output apparatus, an audio information output method, and an audio information output program according to the present invention will be explained in detail below with reference to the accompanying drawings.

### (First Embodiment)

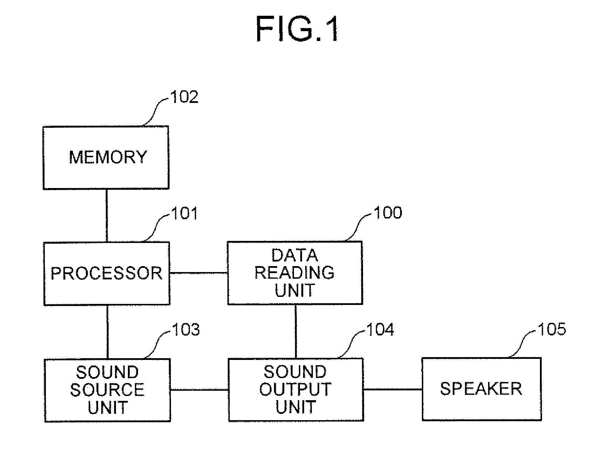

Fig. 1 is an explanatory view showing an example of a hardware configuration of an audio information output apparatus according to a first embodiment of the present invention. A data reading unit 100 shown in Fig. 1 reads the contents and the contents information described above from various media storing contents. Herein, it is assumed that the data reading unit 100 is specifically a CD player and reads various data retained on the recording surface of a CD by mechanically rotating the CD set in the player and irradiating a laser beam on the CD. Of the data read at this point, the data of the contents themselves (specifically, songs, etc.) are output to a sound output unit 104 described later and contents information is output to a processor 101 described later, respectively.

The processor 101 realizes a retrieving/creating process, etc., of a sound icon described later by executing a program in a memory 102 described later. The memory 102 stores a program to be executed on the processor 101, data of the sound icon described later, etc.

A sound generator unit 103 makes sound specified by parameters based on the parameters input from the processor 101. The sound generator unit 103 is specifically a MIDI sound source chip. However, the MIDI sound source chip is only an example of the sound generator unit 103, and any type of device that can make sound having an arbitrary tone quality may be employed as the sound generator unit 103.

The sound output unit 104 converts sound input from the sound generator unit 103 or the data such as songs, etc., input from the data reading unit 100 into an electric signal and outputs the signal to the speaker 105. The speaker 105 converts the electric signal input from the sound output unit 104 into sound and outputs the sound.

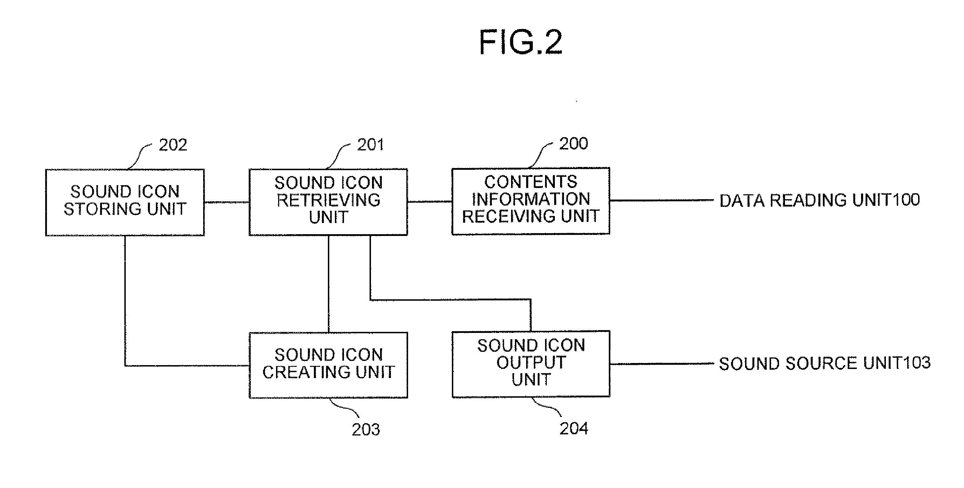

Fig. 2 is an explanatory view showing the functional configuration of the audio information output apparatus according to the first embodiment of the present invention. However, in the figure, only the main portion, that is necessary for describing the present invention, of various functions provided to the apparatus is shown.

In Fig. 2, a contents information receiving unit 200 is a functional unit that receives the contents information read by the data reading unit 100 shown in Fig. 1 from the unit 100. More specifically, this contents information receiving unit 200 is realized by the processor 101 that executes the program in the memory 102 shown in Fig. 1.

A sound icon retrieving unit 201 is a functional unit that retrieves a sound icon correlated with the contents information input from the contents information receiving unit 200, from a sound icon storing unit 202 described later as well as, when the aimed icon is not present, instructs a sound icon creating unit 203 described later and causes the unit 203 to create a new sound icon. More specifically, this sound icon retrieving unit 201 is realized by the processor 101 that executes the program in the memory 102 shown in Fig. 1.

The sound icon storing unit 202 is a functional unit that retains sound icons created by the sound icon creating unit 203 described later, respectively for each recording medium (a CD in this case), correlating the sound icons with the contents information of each CD. Specifically, this sound icon storing unit 202 is realized by the memory 102 shown in Fig. 1.

The sound icon creating unit 203 is a functional unit that creates a sound icon for each recoding medium specified by the contents information read by the data reading unit 100 (in this case, each CD that stores the contents specified by this information). More specifically, this sound icon creating unit 203 is realized by the processor 101 that executes the program in the memory 102 shown in Fig. 1.

A "sound icon" is identification information uniquely provided for each recording medium in the form of sound (identification sound). Arbitrary identification sound (in addition to sound effects, this may be arbitrary audio information such as a specific melody, a phrase, sampled natural sound, a portion of the contents, the title of an album/song, sound of reading the name of a performer, etc.) is assigned to each CD as, for example, a song of birds for a certain CD, sound of a fanfare for another CD, etc. When the CD is played, which CD will be played next can be announced to a user by outputting this sound icon in the form of sound prior to the contents.

More specifically, the sound icon is a combination of the values of parameters characterizing the above identification sound. However, the apparatus is mounted with the MIDI sound source chip (the sound generator unit 103 shown in Fig. 1) as described above. Because a plurality of tone qualities are preset in this chip in advance as fundamental tones, these fundamental tones (or combinations of the plurality of fundamental tones), modulation, the timing of attack/release, etc. only have to be determined as parameters.

The sound icon creating unit 203 determines values respectively of the above parameters at random for a CD specified by the contents information input from the sound icon retrieving unit 201. Otherwise, a plurality of combinations of values of the parameters may be prepared in advance and one unused combination may be selected at random from the prepared combinations. In the former case, a large number of respectively different sound icons can be created. However, not only the number of CDs retained by an individual user but also the number of CDs played by the apparatus usually has specific limits respectively. Therefore, the latter case practically has no problem especially.

Combining the former method and the latter method, a new sound icon may be created by, for example, when unused sound icons are still left, selecting one unused sound icon from those icons or, when all sound icons are used, by selecting a used sound icon at random and varying at random a part of or all of the values of the parameters of the selected sound icon. In either method, any sound icon created by the sound icon creating unit 203 should not be same as any of the existing sound icons in the sound icon storing unit 202.

A sound icon output unit 204 is a functional unit that outputs a sound icon (more specifically, the values of the various parameters described above) input from the sound icon retrieving unit 201 to the sound generator unit 103 shown in Fig. 1. More specifically, this sound icon output unit 204 is realized by the processor 101 that executes the program in the memory 102 shown in Fig. 1.

### Example 1

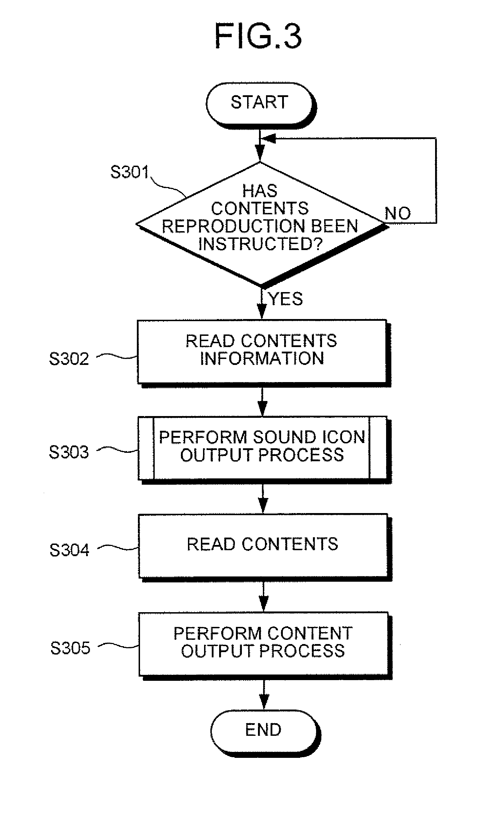

Fig. 3 is a flowchart showing the entire procedure of an audio information output process by the audio information output apparatus according to the first embodiment of the present invention. When reproduction of contents is instructed to the apparatus (step S301: YES), the apparatus reads contents information from the TOC of a target CD using the data reading unit 100 shown in Fig. 1 (step S302) as well as outputs a sound icon of the CD under the control of the processor 101 (step S303).

The contents in the above CD are read by the data reading unit 100 (step S304) as well as is output by the sound output unit 104 and the speaker 105 as sound (step S305). Order of steps S303 and S304 may be reversed or these steps may be executed in parallel. However, for steps S303 and S305, the former must always come temporally before the latter. That is, in the audio information output apparatus according to the embodiment, a sound icon of the target CD is first output and reproduction of songs, etc., that are the contents of the CD is started.

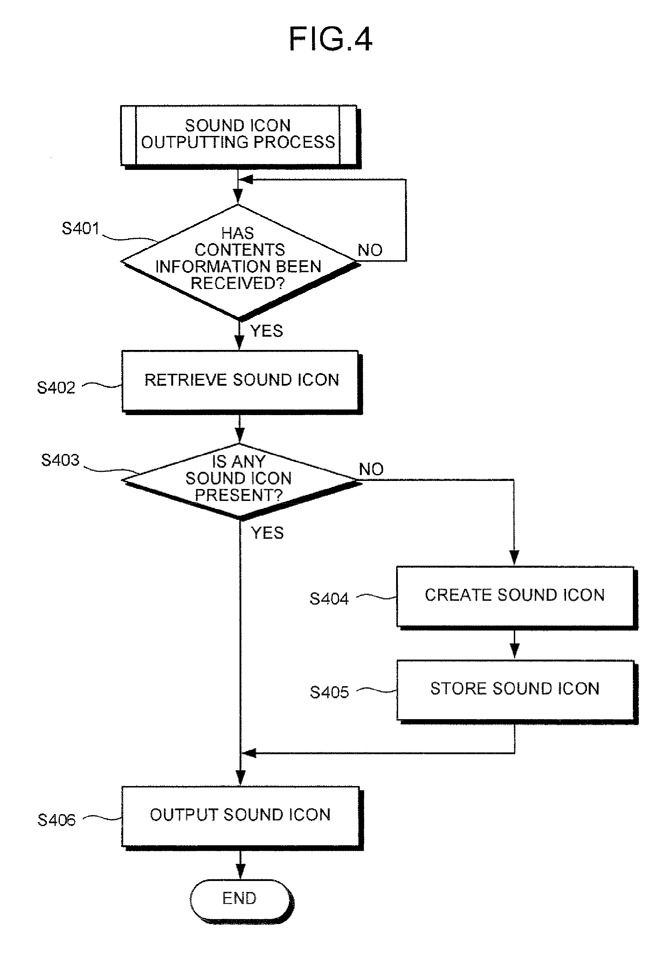

Fig. 4 is a flowchart showing a detailed procedure of a sound icon output process (step S303 of Fig. 3) by the audio information output apparatus according to the first embodiment of the present invention. When contents information has been read from the TOC of a target CD by the data reading unit 100 shown in Fig. 1, the contents information receiving unit 200 realized by the processor 101 receives the above information (step S401: YES) and outputs the received information to the sound icon retrieving unit 201.

The sound icon retrieving unit 201 searches in the sound icon storing unit 202 with the contents information input from the contents information receiving unit 200 (step S4G2). As described above, the contents information includes a plurality of items such as the number of songs, the playing time of each song, the title of each song, etc. However, at least the number of songs and the playing time of each song are recorded in the TOC of any CD. Therefore, the sound icon retrieving unit 201 searches in the sound icon storing unit 202 using, for example, these items as keys.

When the aimed sound icon has been successfully retrieved (step S403: YES), the sound icon retrieving unit 201 outputs the retrieved sound icon to the sound icon output unit 204, and (the values of the various parameters constituting) the above sound icon is output by the sound icon output unit 204 that has received the output sound icon to the sound generator unit 103 shown in Fig. 1. Sound that is characterized by the above parameters is made by the sound generator unit 103 and output from the speaker 105 as sound through the sound output unit 104 (step S406).

When the target sound icon can not have been retrieved (step S403: NO), the sound icon retrieving unit 201 outputs the contents information input from the contents information receiving unit 200 to the sound icon creating unit 203 and instructs creation of a new sound icon.

The sound icon creating unit 203 that has received the instruction creates a sound icon by determining values of the various parameters at random (step S404), and stores the created sound icon in the sound icon storing unit 202 correlating the icon with the contents information (step S405) as well as outputs the icon to the sound icon retrieving unit 201. Similarly to the sound icon retrieved from the sound icon storing unit 202, this output sound icon is delivered from the sound icon retrieving unit 201 to the sound icon output unit 204 and is output through the sound generator unit 103, the sound output unit 104, and the speaker 105 as sound (step S406).

After the sound icon has been output as above, in the apparatus, the contents (the songs in this case) in the above CD are output as sound from the data reading unit 100 through the sound output unit 104 and the speaker 105 (steps S304, S305 of Fig. 3).

According to the first embodiment described above, because the unique identification information (more specifically, the identification sound) is provided to each CD as well as is output as sound, the user can identify each CD only with the user's ears without checking the contents information displayed on a display, etc. with the user's eyes. Therefore, the user does not have to be caused to look aside or look another way while driving and the safety of driving can be improved.

Because the above identification sound is output immediately after the instruction for reproduction, which CD will be played can be predicted before the contents (for example, a song) in a CD start to be actually heard. To reversely describe, because a CD can be identified without waiting for a song therein to start to be heard, an aimed CD can be easily and swiftly found out from a plurality of CDs. Thereby, improvement of the operability of the apparatus can be improved.

Especially, for a car audio apparatus, a user often listens to a plurality of CDs that the user has brought into his/her car for many times repeatedly. Therefore, even for the identification sound determined at random, the correlation of the identification sound with each CD is spontaneously memorized as the user listens to the identification sound. When a CD that has never been played on the apparatus is played, a novel (unfamiliar) identification sound is heard. Therefore, a newly inserted CD can be identified instantly even when, for example, a plurality of CDs are played being switched using a CD changer.

### (Second Embodiment)

A second embodiment according to an embodiment of the present invention will be described. In the first embodiment described above, the values of the various parameters constituting a sound icon are determined at random. However, it can be considered that the identifiability of CDs with sound icons will be improved when the values of the parameters are caused to have regularity corresponding to the contents of each CD. Therefore, as the second embodiment described below, the parameters of sound icons may be determined depending on arbitrary information such as, for example, the names of performers, the names of composers, genres, etc., included in the contents information.

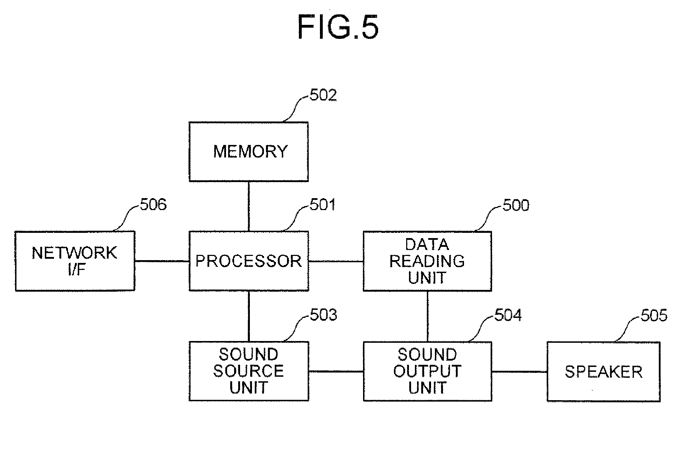

Fig. 5 is an explanatory view showing an example of the hardware configuration of an audio information output apparatus according to the second embodiment of the present invention. This hardware configuration differs from that of the first embodiment shown in Fig. 1 in that a network I/F 506 that connects with a network (more specifically, the Internet) under an instruction received from a processor 501 and controls transmission/reception of data through the network, is added in this hardware configuration. In the figure, components other than the network I/F 506 are same as those having the same names in Fig. 1.

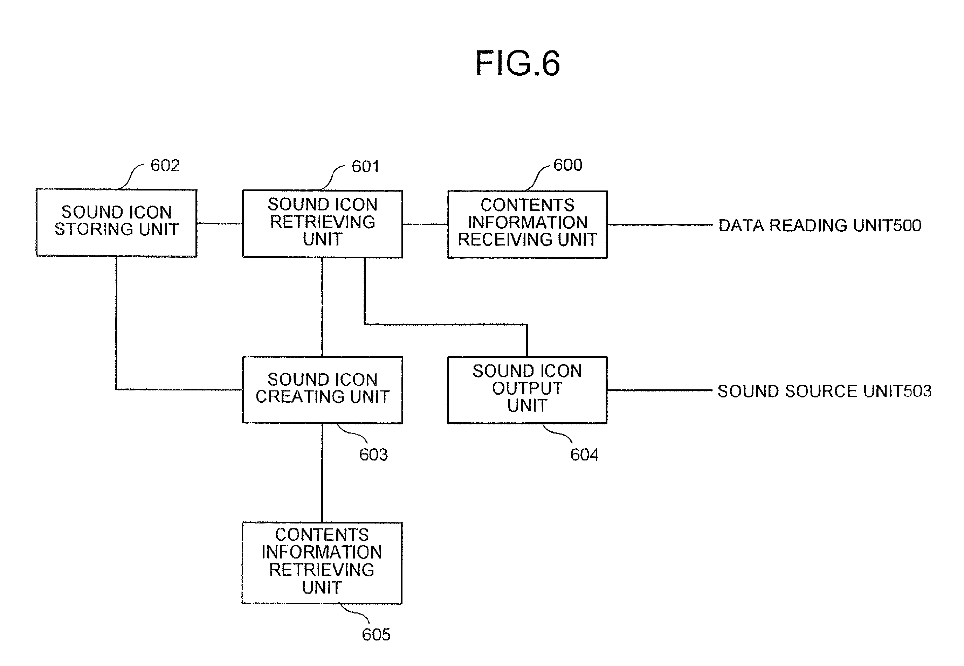

Fig. 6 is an explanatory view showing the functional configuration of the audio information output apparatus according to the second embodiment of the present invention. This functional configuration differs from that of the first embodiment shown in Fig. 2 in that, different from the sound icon creating unit 203 of the first embodiment, a sound icon creating unit 603 of the second embodiment determines the parameters of sound icons not at random but based on the contents information of CDs. For example, when the name of a performer "A" is present in the contents information of a CD, sound of a fanfare is selected as the fundamental tone. Even when the fundamental tone is same, sound icons having nuances can be created by making difference between modulations and the timings of attack/release.

Depending on CDs to be read, only the number of songs and the playing time are recorded as the contents information. In the second embodiment, a contents information retrieving unit 605 is newly provided and the unit 605 retrieves and acquires the contents information necessary for creating sound icons from a database on the Internet (more specifically, for example, CDDB2 (Compact Disc Data Base 2) of Gracenote, Inc., U. S., etc.).

That is, the contents information retrieving unit 605 compares the number of songs and the playing time of each song of each CD that are registered in the above database with the number of songs and the playing time of each song that have been delivered from the sound icon creating unit 603, and downloads the contents information of CDs for which the above compared items coincide as well as outputs the downloaded contents information to the sound icon creating unit 603. The sound icon creating unit 603 creates a sound icon of the target CD referring to the contents information downloaded from the Internet as well as the contents information read from the CD itself. More specifically, the contents information retrieving unit 605 is realized by the processor 501 that executes a program in a memory 502 shown in Fig. 5 and the network I/F 506 that has received the instruction from the processor 501.

### Example 2

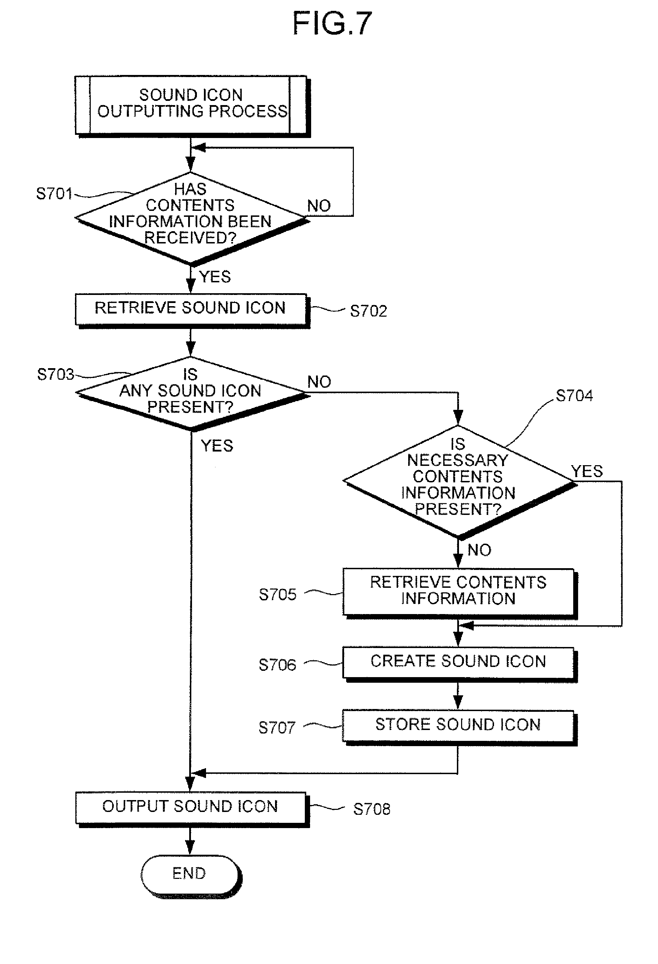

Fig. 7 is a flowchart showing the detailed procedure of an audio information output process by the audio information output apparatus according to the second embodiment of the present invention. Because the entire procedure of the audio information output process by the apparatus is same as that of the first embodiment shown in Fig. 3, the description thereof is omitted herein. When contents information has been read by a data reading unit 500 shown in Fig. 5 from a TOC of a target CD, a contents information receiving unit 600 that is realized by the processor 501 receives the above information (step S701: YES), and outputs the received information to a sound icon retrieving unit 601.

The sound icon retrieving unit 601 searches in a sound icon storing unit 602 with the contents information input from the contents information receiving unit 600 (step S702). When a sound icon that has been correlated with the information has been retrieved (step S703: YES), the sound icon retrieving unit 601 outputs the sound icon to a sound icon output unit 604, and (the values of various parameters constituting) the above sound icon is output to a sound generator unit 503 shown in Fig. 5 by the sound icon output unit 604 that has received the sound icon. Sound characterized by the above parameters is made by the sound generator unit 503 and is output as sound from a speaker 505 through a sound output unit 504 (step S708).

When no target sound icon has been retrieved (step S703: NO), the sound icon retrieving unit 601 outputs the contents information input from the contents information receiving unit 600 to the sound icon creating unit 603 to instruct to create a new sound icon.

The icon creating unit 603 that has received the instruction, judges whether or not sufficient contents information necessary for creating the sound icon has been acquired. At this time, when the necessary contents information has been acquired (step S704: YES), the procedure moves directly to step S706. When the necessary contents information has not acquired (step S704; NO), the contents information retrieving unit 605 is instructed to retrieve the lacking portion of the contents information from the above database (step S705). The contents information is judged to be not sufficient because of the case where, for example, though the sound icon creating unit 603 selects the fundamental tone of a sound icon according to a performer, only the number of songs and the playing time of each song are included in the contents information input from the sound icon retrieving unit 601.

Both when the contents information necessary for creating a sound icon has been read from the CD itself (step S704: YES), and when the lacking portion has been acquired from the database (step S704: NO, step S705), the sound icon creating unit 603 creates a sound icon of the above CD by selecting the various parameters such as the fundamental tone, the modulation, the timing of attack/release, etc., based on the above information (step S706).

The created sound icon is stored in the sound icon storing unit 602 being correlated with the contents information (step S707), and is output to the sound icon retrieving unit 601. Similarly to the sound icon retrieved from the sound icon storing unit 602, this sound icon is delivered from the sound icon retrieving unit 601 to the sound icon output unit 604 and is output as sound to through the sound generator unit 503, the sound output unit 504, and the speaker 505 shown in Fig. 5 (step S708).

According to the second embodiment described above, the identifiability of CDs with sound icons will be improved as, for example, even who is the performer of the CD that will be played next can be seen only by listening to a sound icon because the identification sound of each CD is assigned regularly according to the characteristics of the contents in the CD.

As the criteria for selecting the above parameters, various items such as whether the performer is male or female, which genre the CD is classified in, or which user likes the CD/performer, etc., in addition to the name of the performer as above, can be considered. The above identifiability of CDs will be more improved by providing each CD with sound that fits the "atmosphere" of the CD as, for example, classical music-like identification sound to a CD of "classical music" and jazz-like identification sound to a CD of "jazz".

In the second embodiment described above, the contents information that is the criteria for selecting the parameters is acquired from the CD itself and/or the remote database. However, this database does not have to necessarily be on the network or the Internet and may be, for example, a database that is prepared in a HD (Hard Disk) in an on-vehicle apparatus. The contents information can be acquired from the recording medium that stores the contents itself and the above database separately constructed, etc., and, in addition, can be acquired as, for example, appended information of digital broadcasting. When the contents are voice files or image files, the contents information is acquired from a predetermined area for those files such as, for example, a LIST chunk in case of WAVE files, in stead of the TOC described above. In this manner, the source (origin) and format of the contents information may be diversified for each set of contents.

In the first embodiment and the second embodiment described above, CDs are assumed to be the specific recording media. However, in addition, for example, various disks such as an MD, a DVD, an HD, etc., or external apparatuses such as a portable MP3 player incorporating a hard disk such as an iPOD(R) are capable of creating identification sound for each arbitrary recording medium capable of storing contents that have been made electronic. Identification sound may be assigned to not necessarily to each medium as unit but also to, for example, each track as unit, each chapter as unit (in case of a CD, a DVD, etc.), each folder as unit, and each file as unit (in case of an HD or an external apparatus, etc.).

According to the embodiment, a plurality of recording media can be identified only by the acoustic sense because identification sound is provided to each recording medium that stores the contents, in the form of sound. A recording medium can be identified without waiting for the start of a song, etc., because the above identification sound has been output before the reproduction of the contents. The values of the various parameters characterizing the identification sound can be determined respectively at random or according to what is included in the contents.

The audio information output method described in the embodiment may be realized by executing a program prepared in advance, on a processing apparatus such as a processor, a micro-computer, etc. This program is recorded in a recording medium readable by a processing apparatus, such as a ROM, an HD, an FD, a CD-ROM, a CD-R, a CD-RW, an MO, a DVD, etc., and is executed by being read from the recording medium by the processing apparatus. This program may be a transmission medium capable of being distributed through a network such as the Internet, etc.

## Claims

1. An audio information output apparatus that outputs audio information on contents converted into an electronic form, as sound, comprising:
a reading unit that reads information on the contents from a recording medium that stores the contents;
a retrieving unit that retrieves unique identification information created for each recording medium based on the information read by the reading unit;
a creating unit that creates the identification information for the recording medium for which the identification information can not be retrieved by the retrieving unit; and
an output unit that outputs sound identified by the identification information retrieved by the retrieving unit or the identification information created by the creating unit.

2. The audio information output apparatus according to claim 1, wherein
the output unit outputs sound identified by the identification information prior to the output of the audio information of the contents.

3. The audio information output apparatus according to claim 1 or 2, wherein
the creating unit creates the identification information by determining at random values of parameters characterizing the sound.

4. The audio information output apparatus according to claim 1 or 2, wherein
the creating unit creates the identification information by determining the values of the parameters characterizing the sound based on the information read by the reading unit.

5. An audio information output method of outputting audio information on contents converted into an electronic form, as sound, comprising:
a reading step of reading information on the contents from a recording medium that stores the contents;
a retrieving step of retrieving unique identification information created for each recording medium based on the information read at the reading step;
a creating step of creating the identification information for the recording medium for which the identification information can not be retrieved at the retrieving step; and
an output step of outputting sound identified by the identification information retrieved at the retrieving step or the identification information created at the creating step.

6. An audio information output program that makes a processor execute:
a receiving step of receiving information on contents converted into an electronic form;
a retrieving step of retrieving unique identification information created for a recording medium that stores the contents based on the information received at the receiving step;
a creating step of creating the identification information for the recording medium for which the identification information can not be retrieved at the retrieving step; and
an output instructing step of instructing a sound generator to output sound identified by the identification information retrieved at the retrieving step or the identification information created at the creating step.
